# EUROPÄISCHE PATENTANMELDUNG

(11) **EP 3 751 788 A1**
(43) Veröffentlichungstag der Anmeldung: **16.12.2020**
(21) Anmeldenummer: 20176477.6
(22) Anmeldetag: 26.05.2020
(51) Int. Cl.: H04L 12/24, G06Q 50/04, G05B 19/418

(54) **VERFAHREN ZUR KONFIGURATION EINES ANWENDUNGSPROTOKOLLS IN EINER FERTIGUNGSANLAGE, COMPUTERPROGRAMM UND PROZESSMODUL**

(30) Priorität: 14.06.2019 DE 102019208715
(71) Anmelder: Robert Bosch GmbH, 70442 Stuttgart (DE)
(72) Erfinder: Eckhardt, Andreas, 64756 Mossautal-Guettersbach (DE); Schoeffler, Michael, 75365 Calw-Altburg (DE); Prinz, Frederick, 71272 Renningen (DE)

(57) **Zusammenfassung**

Verfahren zur Konfiguration eines Anwendungsprotokolls 4 in einer Fertigungsanlage mit mindestens einem Prozessmodul 1, wobei das Prozessmodul 1 zur Durchführung mindestens einer Funktion in der Fertigungsanlage ausgebildet ist, wobei das Prozessmodul 1 eine Verwaltungsschale 9 aufweist, wobei das Prozessmodul 1 ausgebildet ist, mit Teilnehmern der Fertigungsanlage datentechnisch mittels eines Netzwerkprotokolls 3 zu kommunizieren, wobei das Netzwerkprotokoll 3 mindestens ein anwendungsspezifisches Anwendungsprotokoll 4 umfasst, wobei das Anwendungsprotokoll 4 mindestens einen Anwendungskonfigurationsparameter umfasst, wobei die Verwaltungsschale 9 mindestens ein Submodell 10, 10a-10d aufweist, wobei das Submodell 10, 10a-10d mindestens einen Submodellparameter 12, 12a-12d umfasst, wobei das Anwendungsprotokoll 4 basierend auf mindestens einem der Submodelle 10, 10a-10d ausgeführt wird, wobei für den mindestens einen Anwendungskonfigurationsparameter einer der oder der Submodellparameter 12, 12a-12d des zur Ausführung genutzten Submodells 10, 10a-10d gesetzt wird.

## Beschreibung

### Stand der Technik

Es wird ein Verfahren zur Konfiguration eines Anwendungsprotokolls in einer Fertigungsanlage mit mindestens einem Prozessmodul vorgeschlagen. Das Prozessmodul ist zur Durchführung mindestens einer Funktion in der Fertigungsanlage ausgebildet, wobei das Prozessmodul eine Verwaltungsschale aufweist.

In der fertigenden Industrie werden die Innovationszyklen und Wechselzeiten zwischen Produktvarianten immer kürzer. Die zur Herstellung verwendeten Anlagen müssen daher immer wandlungsfähiger sein um dieser Kurzlebigkeit folgen zu können.

Die Druckschrift DE 10 2016 204 174 A1, die wohl demnächst kommen Stand der Technik bildet, beschreibt eine Automatisierungsanlage zur Automatisierung von Fertigungsschritten. Die Automatisierungsanlage umfasst hierbei mindestens ein Funktionsmodul und mindestens eine Auswerteeinheit, wobei das Funktionsmodul in einem Anlagenbereich angeordnet werden kann und das Funktionsmodul eine Sensoreinheit aufweist. Basierend auf den von der Sensoreinheit aufgenommenen Umgebungsdaten bestimmt die Auswerteeinheit eine absolute Position des Funktionsmoduls im Anlagenbereich.

### Offenbarung der Erfindung

Es wird ein Verfahren zur Konfiguration eines Anwendungsprotokolls mit den Merkmalen des Anspruchs eins vorgeschlagen. Ferner wird ein Computerprogramm mit den Merkmalen des Anspruchs 13 und ein maschinenlesbares Speichermedium mit den Merkmalen des Anspruchs 14 vorgeschlagen. Weiter betrifft die Erfindung ein Prozessmodul. Bevorzugte und/oder vorteilhafte Ausführungsformen der Erfindung ergeben sich aus den Unteransprüchen, der Beschreibung und den beigefügten Figuren.

Es wird ein Verfahren zur Konfiguration eines Anwendungsprotokolls in einer Fertigungsanlage mit mindestens einem Prozessmodul vorgeschlagen. Das Verfahren kann insbesondere ein computergestütztes oder von einer Software durchgeführtes Verfahren bilden. Die Fertigungsanlage ist insbesondere eine wandlungsfähige Fertigungsanlage, welche eine Mehrzahl an Prozessmodulen aufweist. Die Prozessmodule sind insbesondere austauschbar, entfernbar oder durch weitere ergänzbar. Die Fertigungsanlage kann beispielsweise eine Fabrikationsanlage oder eine Montageanlage bilden.

Das Prozessmodul ist zur Durchführung mindestens einer Funktion in der Fertigungsanlage ausgebildet. Das Prozessmodul ist vorzugsweise frei innerhalb eines Anlagenbereiches anordenbar. Das Prozessmodul kann als interagierendes, kollaborierendes oder kooperierendes Prozessmodul ausgebildet sein. Insbesondere ist das Prozessmodul als realtime (dt. Echtzeit) Prozessmodul ausgebildet. Die Funktion/en des Prozessmoduls kann im Speziellen auch als Fähigkeiten verstanden werden. Beispiele für solche Funktionen sind insbesondere aktive Tätigkeiten, beispielsweise mechanische und/oder physikalische Aktionen. Im Speziellen können die Funktionen Bewegungen, Transportaufgaben, Bohren, Schrauben oder andere physikalische, mechanische und/oder chemische Tätigkeiten umfassen. Ein Prozessmodul kann vorzugsweise mehrere Funktionen, insbesondere unterschiedliche Funktionen umfassen. Beispiele für Prozessmodule können Anlagenmodule, Sensoren, Maschinen, Roboter, Messstationen oder Fertigungsstationen bilden. Die Prozessmodule sind im speziellen als Industrie-4.0-Komponenten ausgebildet.

Das Prozessmodul umfasst eine Verwaltungsschale. Das Prozessmodul kann insbesondere als eine Hardwareeinheit verstanden werden welches ein Softwaremodul umfasst, wobei das Softwaremodul die Verwaltungsschale umfasst und/oder beschreibt. Die Verwaltungsschale kann beispielsweise als eine virtuelle Repräsentation der Funktionen und/oder Eigenschaften des Prozessmoduls ausgebildet sein. Die Verwaltungsschale bildet beispielsweise ein Interface zwischen dem Prozessmodul und einem weiteren Prozessmodul und/oder einer Steuerung. Im englischsprachigen wird häufig als Verwaltungsschale der Begriff asset administration shell genutzt.

Das Prozessmodul ist ausgebildet, mit Teilnehmern der Fertigungsanlage kommunizieren zu können. Teilnehmer der Fertigungsanlage sind beispielsweise weitere Prozessmodule, Switches, Software-Defined-Network-controller und/oder weitere Teilnehmer des Netzwerkes. Die Teilnehmer zusammen mit dem Prozessmodul bilden insbesondere ein Netzwerk, wobei das Netzwerk eine Netzwerktopologie aufweist. Bei einer Umstellung auf andere Produkte kann beispielsweise die Netzwerktopologie und/oder das Netzwerk verändert werden, beispielsweise durch einen Austausch von Teilnehmern und/oder Prozessmodulen. Die Kommunikation der Teilnehmer und/oder des Prozessmoduls mit den Teilnehmern erfolgt mittels eines Netzwerkprotokolls. Mittels des Netzwerkprotokolls ist ein datentechnischer Kommunikationsweg zwischen den Teilnehmern geschaffen. Die datentechnische Kommunikation mittels des Netzwerkprotokolls kann eine kabelgebundene Kommunikation oder eine Funkkommunikation bilden. Das Netzwerkprotokoll ist insbesondere mit mehreren Schichten ausgebildet und/oder umfasst mehrere Schichten. Beispielsweise kann das Netzwerkprotokoll gemäß dem OSI Schichtmodell aufgebaut sein und/oder beschrieben werden. Beispielsweise weist das Netzwerkprotokoll mehr als vier und im Speziellen mehr als sechs Schichten auf. Besonders bevorzugt ist es, dass das Netzwerkprotokoll sieben Schichten umfasst. Beispielsweise kann das Netzwerkprotokoll ein Netzwerkprotokoll der Internetprotokollfamilie bilden.

Das Netzwerkprotokoll umfasst, transportiert und/oder berücksichtigt mindestens ein Anwendungsprotokoll. Das Anwendungsprotokoll ist ein anwendungsspezifisches Protokoll. Das Anwendungsprotokoll beschreibt, steuert und/oder ermöglicht beispielsweise den Datenaustausch zur Durchführung der Fertigung in der Fertigungsanlage und/oder zum Betreiben der Fertigungsanlage. Beispielsweise kann das Anwendungsprotokoll das Steuern, beispielsweise in einer vorgegebenen Reihenfolge entsprechend eines Fertigungsablaufes, der Prozessmodule umfassen und/oder beschreiben. Das Anwendungsprotokoll ist vorzugsweise auf einer Schicht oder mehreren Schichten des Netzwerkprotokolls höher als vier angeordnet. Im Speziellen kann das Anwendungsprotokoll auf den Schichten fünf bis sieben übertragen und/oder berücksichtigt werden.

Das Anwendungsprotokoll umfasst mindestens einen Anwendungskonfigurationsparameter. Der Anwendungskonfigurationsparameter ist beispielsweise ein Wert, eine Funktion oder eine Tätigkeit die zur Durchführung der Anwendung, zur Fertigung und/oder zum Betreiben der Fertigungsanlage für den entsprechenden Zweck berücksichtigt und/oder gebraucht wird. Beispielsweise kann das Anwendungsprotokoll erst dann fehlerfrei, optimal und/oder mit hinreichender Qualität ausgeführt werden, wenn alle Anwendungskonfigurationsparameter des Anwendungsprotokolls bekannt und/oder gesetzt sind. Im Speziellen können die Anwendungskonfigurationsparameter nötige Anwendungskonfigurationsparameter umfassen und zusätzlich optionale Anwendungskonfigurationsparameter.

Die Verwaltungsschale umfasst mindestens ein Submodell. Das Submodell kann beispielsweise als ein Datensatz verstanden werden. Der Datensatz des Submodells weist im speziellen eine feste Struktur auf. Das Submodell umfasst beispielsweise Konfigurationsparameter, Eigenschaften und/oder Operationen des jeweiligen Prozessmoduls. Die Submodelle können beispielsweise die einzelnen Fähigkeiten, Funktionen, Werte und/oder Parameter zum Betreiben des Prozessmoduls beschreiben und/oder umfassen. Das Submodell umfasst dabei mindestens einen Submodellparameter. Der Submodellparameter kann ein Wert, eine Funktion und/oder eine Eigenschaft umfassen. Weist ein Prozessmodul beispielsweise zwei unterschiedliche Funktionen auf, so kann dieses Prozessmodul zwei Submodellparameter zur Beschreibung der unterschiedlichen Fähigkeiten in einem gemeinsamen Submodell umfassen oder zwei Submodelle mit Submodellparameter oder Parametern zur Beschreibung der einzelnen Funktionen.

Das Anwendungsprotokoll wird basierend auf mindestens einem der Submodelle und/oder Submodellparameter ausgeführt. Beispielsweise ist zur Anwendung oder Durchführung des Anwendungsprotokolls ein Rückgriff oder Zugriff auf die Submodelle nötig. Insbesondere erfolgt die Durchführung des Anwendungsprotokolls unter Verwendung mindestens eines Submodells. Beispielsweise kann ein Anwendungsprotokoll definieren wie viele Submodelle und/oder welche Art Submodelle es benötigt, wobei das Anwendungsprotokoll erst dann fehlerfrei oder korrekt ausgeführt werden kann, wenn die entsprechende Anzahl und/oder die entsprechenden Submodelle dem Anwendungsprotokoll zugeordnet werden. Die Ausführung und/oder Durchführung des Anwendungsprotokolls mit mindestens einem der Submodelle erfolgt dabei der Art, dass mindestens einer der Anwendungskonfigurationsparameter durch einen, mehrere oder alle Submodellparameter ersetzt und/oder gesetzt wird. Beispielsweise werden die Submodellparameter den Anwendungskonfigurationsparametern gesetzt, sodass das Anwendungsprotokoll mit dem als Anwendungskonfigurationsparametern gesetzten Submodellparametern ausgeführt wird.

Der Erfindung liegt die Überlegung zugrunde, ein einfaches und global verwendbares Verfahren zur Konfiguration eines Anwendungsprotokolls in einer Fertigungsanlage bereitzustellen. Insbesondere kann durch eine gleichartige Verwendung von Submodellen und/oder Verwaltungsschalen ein zentrales Management aller Komponenten ermöglicht werden, wobei insbesondere Änderungen zur Laufzeit der Fertigungsanlage berücksichtigt werden können. Durch die Vereinheitlichung des Konfigurationskonzeptes mittels Submodellen können insbesondere verschiedene Anwendungsprotokolle mit unterschiedlichen Industrie-4.0-Komponenten realisiert werden. Insbesondere sind so auch unterschiedliche Netzwerkprotokolle einfach konfigurierbar.

Insbesondere ist es vorgesehen, dass der oder die Submodellparameter eine Beschreibung einer Fähigkeit, eine Eigenschaft und/oder Operationen umfasst. Die Beschreibung der Fähigkeit und/oder der Eigenschaft kann beispielsweise den Charakter und/oder die Art beschreiben, ferner kann die Beschreibung eine Konfiguration und/oder Konfigurationsparameter der Fähigkeit und/oder Eigenschaften umfassen. Die Konfigurationsparameter in der Beschreibung können einen möglichen Wertebereich beschreiben, alternativ und/oder ergänzend können diese den aktuell festgelegten Wert beschreiben. Die Fähigkeit ist beispielsweise die Fähigkeit des Prozessmoduls in Form der Funktion welche dieses in der Fertigungsanlage übernehmen kann. Eigenschaften sind beispielsweise ob dieses aktiv, passiv, eingeschaltet oder ausgeschaltet ist. Weitere Eigenschaften sind beispielsweise das Teilnehmen im Netzwerk als Master, als Slave, Netzwerkparameter und/oder ein Security Schlüssel. Operationen sind beispielsweise Funktionstypen welche eine Änderung, eine Einstellung oder einen Aktivitätswechsel ermöglichen. Beispiele für Operationen sind ein Ein- oder Ausschalten oder ein Wechsel von Funktionszuständen.

Optional ist es vorgesehen, dass bei einer Änderung des Anwendungsprotokolls und/oder bei der Anwendung eines anderen Anwendungsprotokolls, beispielsweise durch einen Wechsel der Anwendungsprotokolle, ein erweitertes zusätzliches Submodell zur Ausführung kommt ein bestehendes Submodell in der Ausführung abgeschaltet wird oder ein Submodell durch ein anderes ersetzt, ausgetauscht oder erweitert wird. Diese Ausgestaltung liegt die Überlegung zugrunde, dass Anwendungsprotokoll und/oder die verwendeten Submodelle bei der Ausführung des Anwendungsprotokolls zur Laufzeit der Fertigungsanlage ändern zu können. Diese Änderung im Prozess bzw. in der Laufzeit ermöglicht beispielsweise ein Austausch von Parametern, insbesondere eine Änderung der Zuordnung von Submodellparametern zu den Anwendungskonfigurationsparametern während der Laufzeit.

Eine Ausgestaltung der Erfindung sieht vor, dass das Submodell und/oder die Submodellparameter protokollunabhängig ausgebildet sind. Beispielsweise sind die Submodelle so ausgebildet, insbesondere in ihrem Datensatz oder Datenstruktur, dass diese für unterschiedliche Netzwerkprotokolle und/oder unterschiedliche Anwendungsprotokolle verwendbar und/oder lesbar sind. Beispielsweise sind die Submodelle anwendbar für die verschiedensten Netzwerkkonfigurationen und/oder Netzwerkprotokolle, insbesondere sind die Submodelle herstellerunabhängig ausgebildet. Eine protokollunabhängige Beschreibung der Submodelle kann beispielsweise als eine funktionale Beschreibung der Fähigkeit, Eigenschaft oder Operationen sein, beispielsweise auch in Textform und/oder semantisch.

Besonders bevorzugt ist es, dass das Anwendungsprotokoll und/oder das Prozessmodul ausgebildet ist, für ein protokollunabhängiges Submodell die Submodellparameter auf das spezifische Anwendungsprotokoll und/oder die entsprechenden Anwendungskonfigurationsparameter zu mappen, wobei mappen insbesondere als ein Abbilden verstanden wird. Beispielsweise können die protokollunabhängigen Submodellparameter oder Submodelle in das entsprechende Protokoll, Netzwerkprotokoll und/oder Anwendungsprotokoll übersetzt und/oder gemappt werden. Durch das Mappen wird insbesondere das Protokoll unabhängige Submodell zu einem protokollabhängigen Submodell, in Anwendung auf das gewünschte Protokoll. Diese Ausgestaltung liegt die Überlegung zugrunde, eine Herstellerunabhängigkeit zu erzielen und eine flexible Prozess- oder Fertigungsanlage zu erhalten, ohne Rücksicht auf anzuwendende Protokolle.

Besonders bevorzugt ist es, dass das Netzwerkprotokoll eine Middleware bildet. Insbesondere ist das Netzwerkprotokoll als ein DDS-Standard (als DDS wird insbesondere der Standard Data Distributionsservice verstanden, welcher von der Objectmanagement GROUP spezifiziert wurde). Als ein Data Distribution Service wird beispielsweise eine Middleware zur Datenkommunikation innerhalb der Fertigungsanlage verstanden, wobei diese auf einem Publisher Subscriber Konzept basiert.

Ferner kann es vorgesehen sein, dass das Netzwerkprotokoll auf einem OPC UA Standard passiert. OPC UA steht insbesondere für einen Standard des plattformunabhängigen Datenaustausches mit einer serviceorientierten Architecture. OPC UA steht insbesondere für die Abkürzung von Open Platform Communications Unified Achitecture je. Das OPC UA Netzwerkprotokoll bildet insbesondere ein OPC UA PubSub Protokoll, eine Variante von OPC UA, das auf einem Publisher Subscriber Konzept basiert.

Besonders bevorzugt ist es, dass das Anwendungsprotokoll eine Spezifikation des anzuwendenden Submodells oder eine Spezifikation der anzuwendenden Submodelle umfasst. Insbesondere kann es vorgesehen sein, dass ein Anwendungsprotokoll in der Spezifikation die Anwendung genau eines Submodells umfasst. Die Spezifikation beschreibt insbesondere, welches Submodelle, Submodellarten, Submodellparameter und/oder Eigenschaften zur Ausführung des Anwendungsprotokolls benötigt werden. Im Speziellen ist es vorgesehen, dass das Anwendungsprotokoll pro Prozessmodul genau ein Submodell spezifiziert. Das spezifizierte Submodell weist dabei vorzugsweise alle benötigten Submodellparameter auf, die benötigt werden um diese den Anwendungskonfigurationsparametern zuzuordnen.

Im Speziellen ist es vorgesehen, dass das Anwendungsprotokoll eine Mehrzahl an Submodellen zur Ausführung benötigt. Insbesondere kann das Anwendungsprotokoll eine Mehrzahl an unterschiedlichen Submodelltypen, Submodellparametern oder Eigenschaften benötigen. Insbesondere kann das Anwendungsprotokoll pro Prozessmodul eine Mehrzahl an Submodellen zur Ausführung benötigen. Die dazu benötigten Submodellparameter bzw. die Submodellparameter die bei der Ausführung den Anwendungskonfigurationsparametern zugeordnet sind, bildet insbesondere eine Teilfunktionalität des Anwendungsprotokolls und/oder beschreiben eine Teilfunktion des Prozessmoduls. Teilfunktionalitäten sind beispielsweise eine Eigenschaft des Prozessmoduls als Publisher, Subscriber, Netzwerksettings, PubSub Settings und/oder PubSub Connection Eigenschaften. Die benötigten Submodelle zur Ausführung des Anwendungsprotokolls können vorzugsweise als notwendige und optionale Submodelle unterschieden werden. Notwendige Submodelle sind diese, die zwangsläufig zur Ausführung des Anwendungsprotokolls benötigt werden, beispielsweise Publisher, Subscriber. Optionale Submodelle sind beispielsweise ein Submodell als Pub-Sup Diagnosting Modul. Dieses Modul kann beispielsweise eine Diagnose für das Netzwerkprotokoll bilden und ist nicht zwangsläufig zur Ausführung benötigt. Dieser Ausgestaltung liegt die Überlegung zugrunde, dass entgegen der Spezifikation in einem Submodell die Anlage von solchen Submodellen sehr aufwendig ist, da eine Fertigungsanlage eine Vielzahl an Teilnehmern aufweisen kann und so eine Vielzahl an Parametern benötigt werden. Durch die Zergliederung in unterschiedliche Submodelle, kann das Anwendungsprotokoll spezifisch mit sehr einfach aufgebauten Submodellen ausgeführt werden.

Insbesondere kann es vorgesehen sein, dass das Submodell eine Operation zum Ändern von Submodellparametern umfasst. Beispielsweise kann durch Benutzung und/oder Ausführung der Operation ein jeweiliger oder eine Mehrzahl an Submodellparametern geändert werden, insbesondere während der Laufzeit. Beispielsweise kann so eine Regelung der Fertigungsanlage und/oder des Anwendungsprotokolls zur Laufzeit erfolgen.

Eine Ausgestaltung der Erfindung sieht vor, dass die Verwaltungsschale eine Änderungsschnittstelle aufweist. Die Änderungsschnittstelle ist insbesondere eine zusätzliche Schnittstelle, in welcher ein Benutzer auf die Verwaltungsschale zugreifen kann. Beispielsweise kann die Änderungsschnittstelle eine Remoteschnittstelle bilden. Die Änderungsschnittstelle dient dazu, dass ein Benutzer auf die Verwaltungsschale zugreifen kann, wobei während des Zugriffs auf die Verwaltungsschale Submodellparameter oder Submodelle änderbar, ergänzbar, löschbar oder hinzufügbar sind. Insbesondere ist es vorgesehen, dass über die Änderungsschnittstelle die Konfiguration des Prozessmoduls von außen sichtbar ist und/oder veränderlich ist.

Besonders bevorzugt ist es, dass das Netzwerkprotokoll ein Protokoll für ein time-sensitives Netzwerk bildet. Insbesondere ist als ein Time sensitives Netzwerk zu verstehen, dass dieses Realtime fähig ist. Beispielsweise ist ein Time sensitives Netzwerk basierend auf dem IEEE Standard 802.1. Time sensitive Netzwerke weisen vorzugsweise eine Zeitsynchronisation, eine Traffic Planung und eine Redundanz auf. Ferner kann es vorgesehen sein, dass das Netzwerk als ein Software-Defined-Netzwerk ausgebildet ist. Beispielsweise wird das Software-Defined-Netzwerk mittels eines SDN-Controllers (Software Defined Networking Controller) betrieben, gesteuert oder verwaltet.

Einen weiteren Gegenstand der Erfindung bildet ein Computerprogramm zur Durchführung des Verfahrens. Das Computerprogramm weist insbesondere einen Programmcode auf, wobei bei Ausführung des Computerprogramms auf einer Rechnereinheit, dem Prozessmodul oder in der Fertigungsanlage zu Durchführung des Verfahrens und/oder der Verfahrensschritte wie vorher beschrieben führt.

Einen weiteren Gegenstand der Erfindung bildet ein maschinenlesbares Speichermedium, wobei auf dem maschinenlesbaren Speichermedium das Computerprogramm wie vorher beschrieben gespeichert ist.

Ferner betrifft die Erfindung ein Prozessmodul für eine Fertigungsanlage. Das Prozessmodul ist insbesondere zur Durchführung des Verfahrens wie vorher beschrieben ausgebildet. Hierbei kann das Verfahren beispielsweise in Software oder Hardware oder in einer Mischform aus Software und Hardware in dem Prozessmodul implementiert sein. Hierzu weist das Prozessmodul zumindest eine Verarbeitungseinheit zum Verarbeiten von Signalen oder Daten, zumindest eine Speichereinheit zum Speichern von Signalen oder Daten und/oder zumindest eine Kommunikationsschnittstelle zum Einlesen oder Ausgeben von Daten auf. Die Verarbeitungseinheit kann beispielsweise ein Signalprozessor, ein Mikrocontroller oder dergleichen sein, wobei die Speichereinheit ein Flashspeicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann. Das Prozessmodul ist ferner zur Durchführung mindestens einer Funktion in der Fertigungsanlage ausgebildet, beispielsweise zur Durchführung eines mechanischen oder physikalischen Bearbeitungsschrittes. Das Prozessmodul weist eine Verwaltungsschale auf. Die Verwaltungsschale weist mindestens ein Submodell mit mindestens einem Submodellparameter auf. Das Prozessmodul ist ausgebildet mit weiteren Teilnehmern der Fertigungsanlage datentechnisch mittels eines Netzwerkprotokolls zu kommunizieren, wobei das Netzwerkprotokoll mindestens ein Anwendungsprotokoll umfasst und/oder überträgt. Das Prozessmodul ist ausgebildet, das Anwendungsprotokoll mit Submodellparametern des Submodells zu versorgen und/oder das Anwendungsprotokoll mit den Submodellparametern auszuführen.

Einen weiteren Gegenstand der Erfindung bildet eine Fertigungsanlage mit mindestens einem Prozessmodul wie vorher beschrieben.

Weitere Vorteile, Wirkungen und Ausgestaltungen ergeben sich aus den beigefügten Figuren und deren Beschreibung. Dabei zeigen:
Figur 1: schematisch ein Ausführungsbeispiel eines Prozessmoduls;
Figuren 2a, b, c: Prozessmodule mit mindestens einem Submodell;
Figur 3a, b: Prozessmodule mit zwei Submodellen.

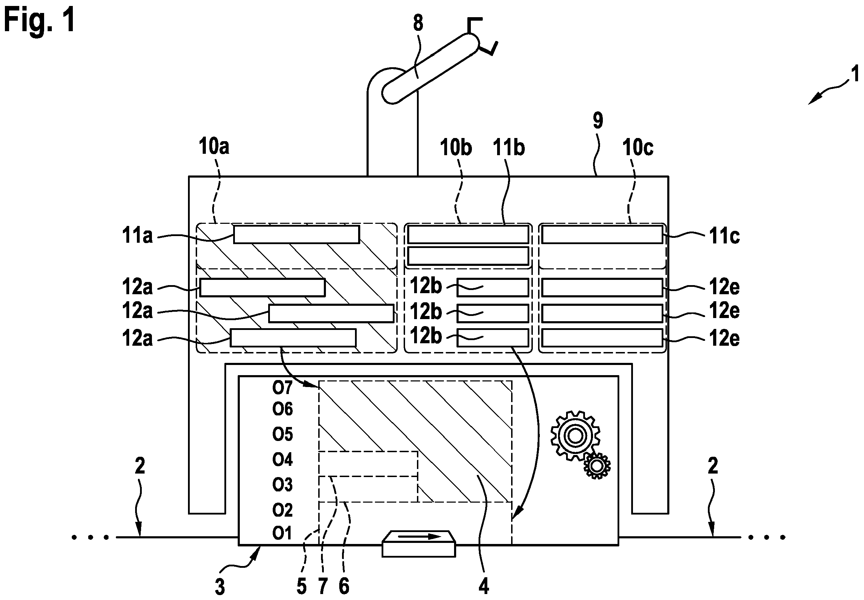

Figur 1 zeigt schematisch ein Prozessmodul 1 in einer Fertigungsanlage mit einer Mehrzahl an dergleichen Prozessmodulen 1, wobei die Prozessmodule 1 als Teilnehmer mittels einer Netzwerkverbindung 2 datentechnisch verbunden sind.

Die Netzwerkverbindung 2 ist insbesondere als ein time-sensitive Netzwerkverbindung ausgebildet. Die Netzwerkverbindung basiert auf einem Netzwerkprotokoll 3. Das Netzwerkprotokoll 3 ist ein auf einem OSI-Layer Prinzip basierendes Netzwerkprotokoll. Das Netzwerkprotokoll 3 umfasst sieben Schichten, auch OSI-Layer genannt, mit den Bezugszeichen O1, O2, O3, O4, O5, O6, O7. Die Schichten O1 bis O7 dienen unterschiedlichen Funktionen bzw. dem Transport unterschiedlicher Datentypen. Beispielsweise ist das Netzwerkprotokoll 3 so ausgebildet, dass die Schichten O1 und O2 der Übertragung und/oder der Etablierung des time sensitiven Netzwerkes dienen. Auf den Schichten O5-7 wird ein Anwendungsprotokoll 4 transportiert. Neben dem Anwendungsprotokoll umfasst das Netzwerkprotokoll 3 das TSN-Protokoll 5 in den Schichten O1 und O2, IP-Daten auf der Schicht O3 und UDP Daten 7 auf der Schicht O4. Das Netzwerkprotokoll 3 umfasst dabei Netzwerkparameter und/oder Konfigurationsparameter. Die Konfigurations- und/oder Netzwerkparameter werden zur Durchführung der Netzwerkverbindung benötigt und/oder werden damit übertragen. Damit diese Übertragung stattfinden kann, ist es vorgesehen, dass diesen Konfigurationsparametern Werte zugeordnet werden müssen.

Das Prozessmodul 1 ist als ein Modul in der Fertigungsanlage ausgebildet und kann beispielsweise mittels eines Manipulators 8 Tätigkeiten durchführen. Tätigkeiten sind beispielsweise ein Transport oder eine Montage eines Bauteils.

Das Prozessmodul 1 weist ferner eine Verwaltungsschale 9 auf. Die Verwaltungsschale 9 kann beispielsweise softwareimplementiert ausgebildet sein und bildet vorzugsweise einen Datensatz. Die Verwaltungsschale umfasst eine Mehrzahl an Submodellen 10a, 10b, 10c und 10d die Submodelle sind als eine virtuelle Beschreibung mindestens einer Funktion, Fähigkeit oder Operation des Prozessmoduls 1 ausgebildet. Die Submodelle weisen dabei jeweils einen Submodellnamen 11a bis 11c auf. Beispielsweise ist ein Supermodell mittels des Submodellnamens aufrufbar oder adressierbar. Insbesondere dient der Submodellname der Spezifikation. Die Submodelle 10a-d weisen ferner Submodellparameter 12a bis 12c auf. Insbesondere kann ein Submodell 10a-d jeweils mehr als einen Supermodellparameter 12 aufweisen. Die Submodellparameter 12 sind beispielsweise Eigenschaften, Events oder Operationen des jeweiligen Submodells bzw. der Prozessmodule 1. Beispielsweise kann ein Submodell 10a-d mit den Submodellparametern 12a-d jeweils eine Teilfunktion des Prozessmoduls 11 charakterisieren oder beschreiben. Das Prozessmodul 1 ist ausgebildet, die Submodelle 10a-d dem Netzwerkprotokoll 3 bzw. hier im Anwendungsprotokoll 4 und den TSN-Daten 5 bereitzustellen. Das Netzwerkprotokoll 3 ist dabei ausgebildet, als Konfigurationsparameter Submodellparameter 12 zu verwenden und/oder zu setzen. Beispielsweise kann ein Anwendungsprotokoll 4 spezifizieren welches Submodell 10a-d es benötigt, und durch abrufen die Submodellparameter 12 zur Anwendung des Anwendungsprotokolls verwenden. Beispielsweise bildet das Submodell 10a ein Submodell zur Protokollkonfiguration, wobei dieses Submodell 10a dem Anwendungsprotokoll 4 zur Anwendung zugeordnet wird. Das Modell 10b ist beispielsweise ein TSN-Profil mit Parametern die benötigt werden um eine TSN Verbindung aufzubauen, wobei das Submodell 10b den TSN-Daten 5 zugeordnet wird und/oder die TSN Daten gleich den Submodellparametern 12b gesetzt werden.

Das Netzwerkprotokoll 3 mit den unterschiedlichen Schichten ist zur Etablierung und/oder zur Aufrechterhaltung der Netzwerkverbindungen mit den Submodellparametern des Prozessmoduls 1 konfiguriert. Benötigte Konfigurationsparameter des Netzwerkprotokolls 3 werden so von dem Prozessmodul 1 geliefert und/oder bereitgestellt. Umfasst das Prozessmodul 1 eine Mehrzahl an Submodellen, kann beispielsweise die Ausführung des Netzwerkprotokolls und/oder des Anwendungsprotokolls nur mit einer Teilmenge und/oder ausgewählten Submodellen erfolgen.

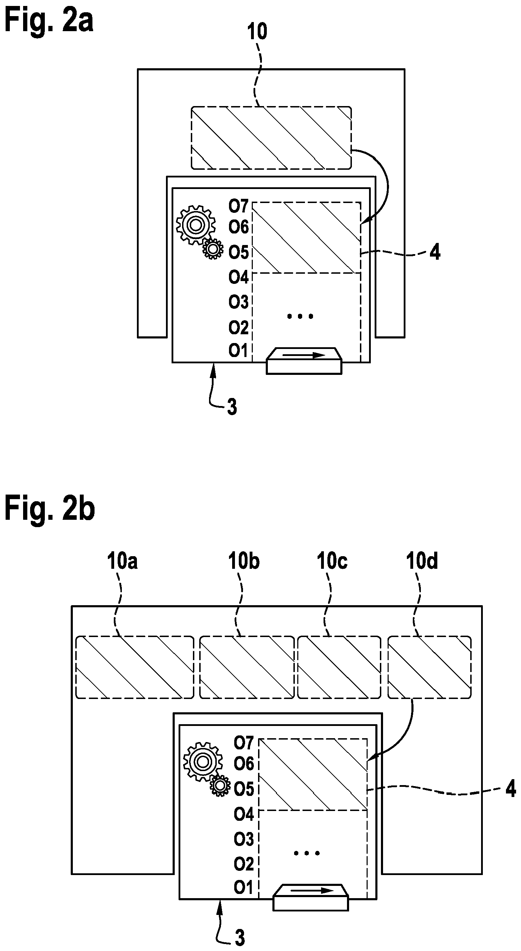

Figur 2a zeigt ein Beispiel, bei dem das Anwendungsprotokoll 4 des Netzwerkprotokolls 3 mit genau einem Submodell 10 ausgeführt wird. Das Submodell 10 weist hierbei beispielsweise alle benötigten Parameter auf, die zur Ausführung des Anwendungsprotokolls 4 benötigt werden. Das Anwendungsprotokoll 4 spezifiziert dabei genau das eine benötigte Submodell sehen. Durch die Zuordnung des einen Submodell 10 an den Anwendungsprotokoll 4 ist das Anwendungsprotokoll ausführbar und die Netzwerkverbindung aktiv betreibbar.

Figur 2b zeigt ein Ausführungsbeispiel bei dem zur Durchführung des Anwendungsprotokolls 4 des Netzwerkprotokolls 3 eine Mehrzahl an Submodellen 10a bis 10d eines Prozessmoduls 1 benötigt werden. Beispielsweise ist das Submodell 10a als ein Pup-Sub Connection Modell, das Submodell 10b als ein Pup-Sub Publisher Modell, und die Submodelle 10c und 10d als weitere Pup-Sub Zusatzmodelle ausgebildet. Zu Durchführung und/oder Übertragung des Anwendungsprotokolls 4 werden die hier gezeigten vier Submodelle 10a bis 10d benötigt. Das Anwendungsprotokoll 4 spezifiziert dabei beispielsweise die vier benötigten Submodelle 10a bis 10d, beispielsweise anhand deren Submodellnamen 11a bis 11d.

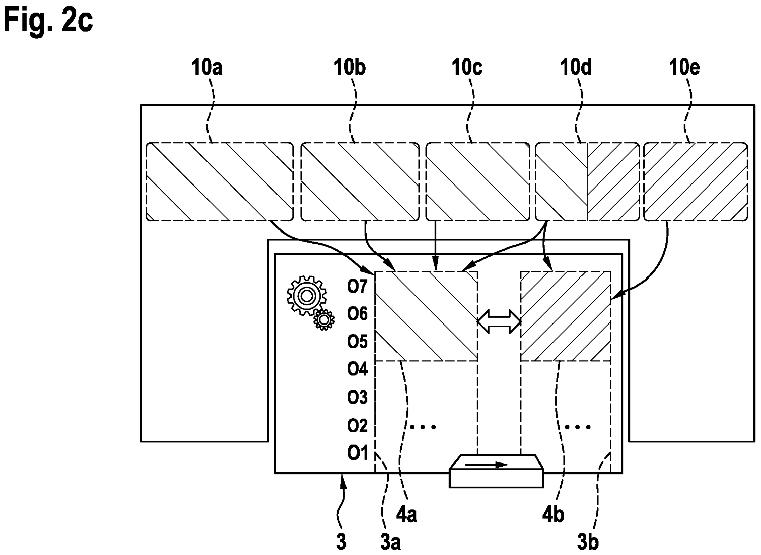

Figur 2c zeigt ein Ausführungsbeispiel, bei welchem das Netzwerkprotokoll 3 unterschiedliche Protokollarten 3a und 3b verwendet. Beispielsweise ist das Protokoll 3a als ein OPC-UA Protokoll ausgebildet wobei das Protokoll 3b als ein DDS-Protokoll ausgebildet ist. Um auf die Variabilität mit unterschiedlichen Protokollarten 3a und 3b reagieren zu können, sind die Submodelle 10a bis 10e protokollunabhängig ausgebildet. Protokollunabhängig meint dabei, dass die Prozessmodelle von unterschiedlichen Protokolltypen 3a/3b verwendet werden können und insbesondere universell lesbar oder ausführbar bzw. verwendbar sind. Beispielsweise sind die Submodelle 10a bis 10c Submodelle die zur Ausführung des OPC-UA Netzwerkprotokolls benötigt werden. Die darin hinterlegten Parameter als Submodellparameter werden benötigt, um das Anwendungsprotokoll 4 in Form eines OPC-UA Protokolls ausführen oder übertragen zu können. Das Submodell 10e bildet ein Submodell das spezifisch und/oder spezifische Submodellparameter für eine DDS-Verbindung aufweist und/oder beschreibt. Das Submodell 10d umfasst beispielsweise einen Security Key, welcher sowohl von der OPC-UA Verbindung als auch von der DDS Verbindung benötigt wird. Diese Ausgestaltung sieht nun vor, dass diese protokollunabhängigen Submodelle 12 jeweils spezifisch zugeordnet werden, beispielsweise das dem Anwendungsprotokoll 4a des Netzwerkprotokolls 3a die Submodelle 10a-10d zugeordnet werden und dem Anwendungsprotokoll 4b des Netzwerkprotokolls 3d die Submodelle 10d und 10e zugeordnet werden.

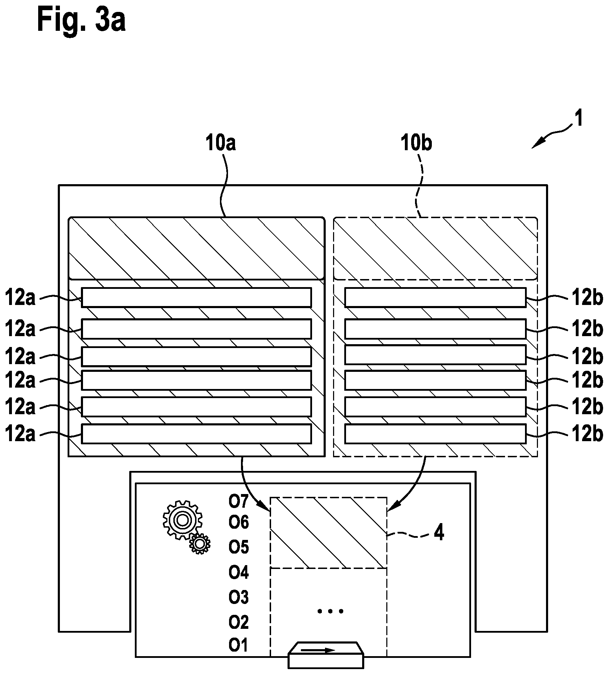

Figur 3a zeigt beispielshaft Submodelle für ein OPC-UA Anwendungsprotokoll 4. Das Prozessmodul 1 weist hierbei das Submodell 10a und 10b auf. Das Submodell 10a weist als Namen "Pub-Sup Connection" auf und das Submodell 10b weist als Namen Pub-Sub Diagnostic auf. Das Submodell 10b bildet ein optionales Submodell, das nicht zwangsläufig zur Ausführung kommen muss. Das Submodell 10a hingegen bildet ein benötigtes Submodell, das zur Ausführung und/oder Übertragung des Anwendungsprotokolls 4 benötigt wird.

Das Pub-Sub Connection Submodell 10a weist als Submodellparameter beispielsweise auf, eine Publisher IP, eine Transport Profile URI, Connection Eigenschaften, Transporteinstellungen, Netzwerkinterfaces und eine Netzwerk Adressen URL.

Das Submodell 10b als Pub-Sub Diagnostic Modell weist als Modellparameter beispielsweise auf ein Diagnostik Level, eine Fehleranzahl oder Fehlerinformationen. Ferner kann das Submodell 10b als Operation eine Reset-Operation aufweisen, beispielsweise um die Netzwerkverbindung zu reseten.

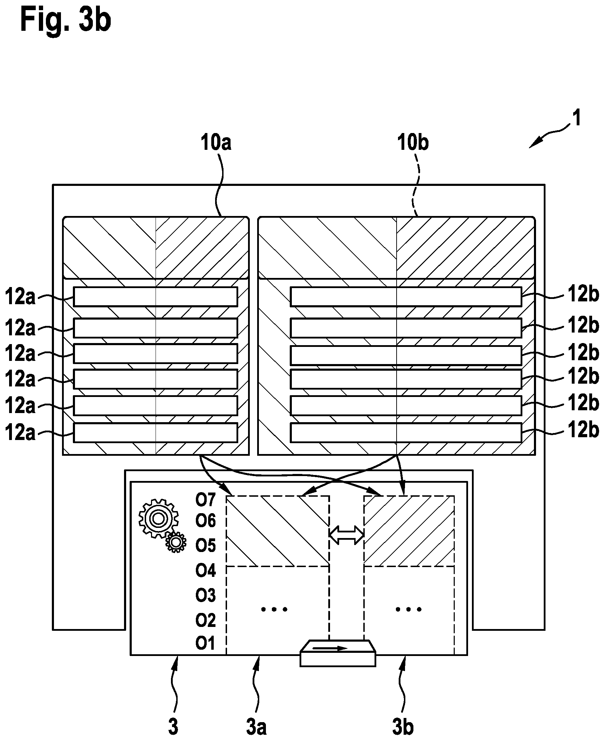

Figur 3b zeigt ein Netzwerkprotokoll 3 mit zwei unterschiedlichen Netzwerkprotokollen, wobei 3a ein OPC-UA Pub-Sub-Protokoll bildet und das Protokoll 3b ein DDS Protokoll.

Das Prozess Modul 1 umfasst hier zwei Submodelle 10a und 10b. Das Submodell 10a bildet ein Netzwerk-Address-Submodell und das Submodell 10b bildet ein Security-Management-Submodell. Die beiden Submodelle 10a und 10b sind protokollunabhängig ausgebildet, und können sowohl unter einem OPC-UA Standard als auch unter einem TDS-Standard angewendet werden, beispielsweise indem die Submodellparameter von 10a und 10b jeweils in die entsprechende Protokollsprache übersetzt werden.

Das Submodell 10a weist als Submodellparameter 12a eine Komponenten-IP, einen Hostnamen, eine Domäne, ein Interface, und einen Hostport auf. Die Submodellparameter 12b des Submodells 10b umfassen beispielsweise eine Komponenten-IP, einen unterstützten Algorithmus, eine minimale Schlüssellänge, einen Schlüsselserver und eine Schlüssellebensdauer. Als Operation kann das Submodell 10b beispielsweise die Operation "Update Security Keys" umfassen.

## Patentansprüche

1. Verfahren zur Konfiguration eines Anwendungsprotokolls (4) in einer Fertigungsanlage mit mindestens einem Prozessmodul (1),
wobei das Prozessmodul (1) zur Durchführung mindestens einer Funktion in der Fertigungsanlage ausgebildet ist,
wobei das Prozessmodul (1) eine Verwaltungsschale (9) aufweist,
wobei das Prozessmodul (1) ausgebildet ist, mit Teilnehmern der Fertigungsanlage datentechnisch mittels eines Netzwerkprotokolls (3) zu kommunizieren, wobei das Netzwerkprotokoll (3) mindestens ein anwendungsspezifisches Anwendungsprotokoll (4) umfasst,
wobei das Anwendungsprotokoll (4) mindestens einen Anwendungskonfigurationsparameter umfasst,
**dadurch gekennzeichnet, dass** die Verwaltungsschale (9) mindestens ein Submodell (10, 10a-10d) aufweist, wobei das Submodell (10, 10a-10d) mindestens einen Submodellparameter (12, 12a-12d) umfasst,
wobei das Anwendungsprotokoll (4) basierend auf mindestens einem der Submodelle (10, 10a-10d) ausgeführt wird, wobei für den mindestens einen Anwendungskonfigurationsparameter einer der oder der Submodellparameter (12, 12a-12d) des zur Ausführung genutzten Submodells (10, 10a-10d) gesetzt wird.

2. Verfahren nach Anspruch 1, **dadurch gekennzeichnet, dass** die Submodellparameter (12, 12a-12d) eine Beschreibung einer Fähigkeit, von Eigenschaften und/oder von Operationen umfassen.

3. Verfahren nach Anspruch 1 oder 2, **dadurch gekennzeichnet, dass** bei einer Änderung des Anwendungsprotokolls (4) und/oder bei der Anwendung eines anderen Anwendungsprotokolls (4) ein weiteres Submodell (10, 10a-10d) zur Ausführung kommt und/oder ein zur Ausführung verwendete Submodelle (10, 10a-10d) durch ein anderes der Submodelle (10, 10a-10d) ausgetauscht wird, erweiterter wird und/oder abgesetzt wird.

4. Verfahren nach einem der vorherigen Ansprüche, **dadurch gekennzeichnet, dass** das Submodell (10, 10a-10d) protokollunabhängig ausgebildet ist.

5. Verfahren nach Anspruch 4, **dadurch gekennzeichnet, dass** das Anwendungsprotokoll (4) ausgebildet ist, die Submodellparameter (12, 12a-12d) des protokollunabhängigen Submodells (10, 10a-10d) auf das spezifische Anwendungsprotokoll (4) und/oder die Anwendungskonfigurationsparameter abzubilden.

6. Verfahren nach einem der vorherigen Ansprüche, **dadurch gekennzeichnet, dass** das Netzwerkprotokoll (3) eine Middleware bildet und/oder auf einem DDS-Standard basiert.

7. Verfahren nach einem der vorherigen Ansprüche, **dadurch gekennzeichnet, dass** das Netzwerkprotokoll (3) auf einem OPC-UA-Standard basiert.

8. Verfahren nach einem der vorherigen Ansprüche, **dadurch gekennzeichnet, dass** das Anwendungsprotokoll (4) eine Spezifikation des anzuwendenden Submodells (10, 10a-10d) oder der anzuwendenden Submodelle (10, 10a-10d) umfasst.

9. Verfahren nach einem der vorherigen Ansprüche, **dadurch gekennzeichnet, dass** das Anwendungsprotokoll (4) eine Mehrzahl an Submodellen (10, 10a-10d) zur Ausführung benötigt, wobei die zur Ausführung verwendeten Submodellparameter (12, 12a-12d) jeweils eine Teilfunktionalität des Anwendungsprotokolls (4) beschreiben und/oder definieren.

10. Verfahren nach einem der vorherigen Ansprüche, **dadurch gekennzeichnet, dass** das Submodell (10, 10a-10d) eine Operation zum Ändern von Submodellparameter umfasst.

11. Verfahren nach einem der vorherigen Ansprüche, **dadurch gekennzeichnet, dass** die Verwaltungsschale (9) eine Änderungsschnittstelle aufweist, wobei mittels der Änderungsschnittstelle auf die Verwaltungsschale (9) zugegriffen werden kann, wobei Submodellparameter (12, 12a-12d) und/oder Submodelle (10, 10a-10d) mittels des Zugriffs änderbar sind.

12. Verfahren nach einem der vorherigen Ansprüche, **dadurch gekennzeichnet, dass** das Netzwerkprotokoll (3) ein Protokoll für time-sensitives Netzwerk bildet und/oder für ein Software-Defined Netzwerk bildet.

13. Computerprogram **dadurch gekennzeichnet, dass** bei einer Ausführung des Computerprogramms auf einem Computer, dem Prozessmodul oder in der Fertigungsanlage ausgebildet ist, das Verfahren und/oder der Verfahrensschritte des Verfahrens nach einem der vorherigen Ansprüche durchzuführen und/oder zu steuern.

14. Maschinenlesbares Speichermedium, wobei auf dem Speichermedium das Computerprogramm nach Anspruch 13 gespeichert ist.

15. Prozessmodul (1) für eine Fertigungsanlage, **dadurch gekennzeichnet, dass** das Prozessmodul ausgebildet ist, das Verfahrens gemäß einem der Ansprüche 1 bis 12 durchzuführen.
